Europäisches Patentamt

European Patent Office

Office européen des brevets

(19)

(11) Veröffentlichungsnummer: **0 134 890**
**B1**

(12) **EUROPÄISCHE PATENTSCHRIFT**

(45) Veröffentlichungstag der Patentschrift: **12.09.90**

(21) Anmeldenummer: **84104960.4**

(22) Anmeldetag: **03.05.84**

(51) Int. Cl.⁵: **B 01 F 3/12, B 01 F 7/22,**
**C 02 F 3/20**

(54) **Vorrichtung zum Herstellen hochwertiger Feststoff-Flüssigkeits-Gemische bis zum kolloiden System oder bis zur Koagulation, zur Wasseraufbereitung oder zum Einbringen von Gasen in Flüssigkeiten.**

(30) Priorität: **19.07.83 DE 3325952**

(43) Veröffentlichungstag der Anmeldung:
**27.03.85 Patentblatt 85/13**

(45) Bekanntmachung des Hinweises auf die
Patenterteilung:
**12.09.90 Patentblatt 90/37**

(84) Benannte Vertragsstaaten:
**AT BE CH DE FR GB IT LI LU NL SE**

(56) Entgegenhaltungen:
**DE-A-2 730 190**
**DE-A-2 841 011**
**DE-A-3 241 011**
**DE-B-1 179 913**
**US-A-4 099 005**

(73) Patentinhaber: **Hacheney, Wilfried**
**Am Königsberg 15**
**D-4930 Detmold (DE)**

(72) Erfinder: **Hacheney, Wilfried**
**Am Königsberg 15**
**D-4930 Detmold (DE)**

(74) Vertreter: **Stracke, Alexander, Dipl.-Ing. et al**
**Patentanwälte Dipl.-Ing. Loesenbeck Dipl.-Ing.**
**Stracke Jöllenbecker Strasse 164 Postfach 5605**
**D-4800 Bielefeld 1 (DE)**

Courier Press, Leamington Spa, England.

EP 0 134 890 B1

## Beschreibung

Zum Herstellen von Suspensionen oder kolloiden Systemen, z.B. von hydrosolen Kolloidaten, werden Vorrichtungen verwendet, die mit antreibbaren Propellern Wirbeltellern oder Pendelscheiben ausgerüstet sind. Diese Mischelemente werden mit hohen Umfangsgeschwindigkeiten bewegt, damit die partikel der Mischung unter dem Einfluß hoher Beschleunigungen zerkleiner werden, bis das angestrebte Feststoff-Flüssigkeits-System erreicht ist. Zusätzlich zu der hohen Antriebsenergie für die Propeller, die Wirbelteller, Pendelscheiben o.dgl. ergibt sich im Betrieb ein intensiver Verschleiß dieser Teile, die somit entsprechend gewartet werden müssen und auch eine relativ geringe Lebensdauer haben.

Der Erfindung liegt die Aufgabe zugrunde, eine Vorrichtung zum Herstellen hochwertiger Feststoff-Flüssigkeits-Gemische bis zum kolloiden System oder bis zur Koagulation so zu gestalten, daß als Antriebsmedium für die Aufspaltung der Partikel der Mischung im wesentlichen die Schwerkraft des Ausgangsgemisches ausgenutzt und einem vom Ausgangsgemisch durchströmten Behälter eine intensive Wirbelströmung des Gemisches erzeugende Raumform gegeben wird, wobei die Vorrichtung verschleißarm arbeitet und mit geringem konstruktiven Aufwand erstellt werden kann.

Zur Lösung dieser Aufgabe ist die erfindungsgemäße Vorrichtung mit einem mehrere obere Füllöffnungen aufweisenden, sich nach unten verjüngenden, vom Medium unter Schwerkrafteinfluß in Spiralwirbeln durchströmten Zwischenbehälter und mit einem Auffangbehälter ausgerüstet, der in den Zwischenbehälter einmündet, wobei dem Zwischenbehälter eine Aufnahmetrommel für das zu behandelnde Medium vorgeschaltet ist, die einen mit als Füllöffnungen dienenden verschließbaren Ablauföffnungen versehenen Boden aufweist, die Aufnahmetrommel, der Zwischenbehälter und der Auffangbehälter eine gemeinsame vertikale Mittelachse haben, die Aufnahmetrommel ringförmig ausgebildet ist und ihre Ablauföffnungen in dem Nähe des Außenrandes des Zwischenbehälters liegen, die Ablauföffnungen mittels eines Ringschiebers verschließbar sind und den Ablauföffnungen abgewinkelte Stutzen zugeordnet sind, deren untere Öffnungen benachbart der Innenwandung des nach unten sich verjüngenden Mantels des Zwischenbehälters liegen, und daß der Zwischenbehälter als rotationssymmetrischer Behälter ausgebildet ist und eine hyperbelförmige Mantellinie in vertikaler Richtung aufweist.

Aus der DE-AS 1 179 913 ist eine Vorrichtung zum Dispergieren pulverförmiger Stoffe bekannt, die mit einem Behälter ausgerüstet ist, der sich nach unten hin komisch verjüngt, jedoch auch zylindrisch oder da von abweichend ausgebildet sein kann. Dieser Behälter ist mit einem tangential einmündenden Rohr versehen, durch das Flüssigkeit zugeführt wird. Oberhalb des Behälters ist ein Bunker vorgesehen, aus dem Material abgezogen wird. Diese Vorrichtung ist zum Mischen eines festen Stoffes mit einer Flüssigkeit geeignet, wobei vermieden werden soll, daß sich Verkrustungen bilden. Durch diese Ausbildung wird eine Kreisströmung erzielt. Um eine innige Durchmischung der Flüssigkeit mit dem pulverförmigen Stoff zu gewährleisten sind am unteren Ende des Behälters innenseitig längsgerichtete Radialrippen vorgesehen, um die Kreisströmung der Flüssigkeit zu unterbinden.

Diese vorbekannte Vorrichtung ist für die Herstellung der eingangs genannten hochwertigen Feststoff-Flüssigkeits-Gemische aufgrund der geringen Strömungsgeschwindigkeiten nicht geeignet.

Eine ähnliche Vorrichtung ist aus der US-PS 4 099 005 bekannt. In einem trichterförmigen, nach unten sich verjüngenden Behälter werden zwei Stoffe gemischt. Diese Vorrichtung liegt noch weiter weg vom Anmeldungsgegenstand, da aus dieser Druckschrift nur ein Mischbehälter als bekannt zu entnehmen ist.

Demgegenüber werden bei der erfindungsgemäßen Vorrichtung die organischen Bestandteile des Abwasers, vor allen Dingen die ungelösten Bestandteile beim Durchströmen des Zwischenbehälters in Spiralwirbeln gespalten, zum Teil zusätzlich in Lösung gebracht oder in ungelöstem Zustand in erheblich verändertem Kornmaß kolloidal in die Abwassermenge eingebunden. Dieses ist eine außerordentlich wichtige Erscheinung, vor allem in Hinblick auf den vereinfachten, aeroben, mikrobiellen Abbau dieser organischen Belastung des Abwassers. Ferner ist es von Bedeutung, daß in den späteren Reaktions- und Nachklärbecken der mikrobielle prozeß forgesetzt wird und daß nicht ein erheblicher Anteil von organischen Bestandteilen vor der mikrobiellen Veränderung durch Absinken dem organischen mikrobiellen Reinigungsprozeß entzogen wird. Im ganzen wird also der Reinigungsprozeß vollständiger und verläuft rein aerob, wodurch das Ausschalten toxischer Nebenwirkungen durch anaerobe anteilige Biologie, wie sie bisher vorliegt, ausgeschaltet wird.

Sofern die erfindungsgemäße Vorrichtung zum Einbringen von Gasen in Flüssigkeit verwendet wird, müssen in der Wandung des Zwischenbehälters Öffnungen vorgesehen werden, durch die durch Zupumpen oder Einsaugen Impfungen mit Gasen vorgenommen werden können. Es ist natürlich auch denkbar, Impfungen mit Flüssigkeiten oder festen Substanzen durchzuführen.

Auf dem Gebiet des Eintragens von Gasen in Flüssigkeiten ist der Stand der Technik sehr unbefriedigend. Dies gilt insbesondere für den Bereich der Wasseraufbereitung wie für den Bereich der Abwasserreinigung. Bei der Wasseraufbereitung arbeitet man mit Verdüsungen und Kaskaden, während man im Bereich der Abwasserreinigung das Einblasen von Luft oder Sauerstoff in die kompakten Abwasserbecken vornimmt. Hier wird sehr viel Energie verschwendet. Wenn man auch in bezug auf die Blasenführung allerlei Anstrengungen unternommen hat, so gibt es doch im wesentlichen keine nennenswerte Anlage, die befriedigende Ergebnisse bringt. Dies zeichnet sich ab in den Sauerstoffeintragwerten, die in den Klärwerken im allgemeinen zwischen 1 und 2 kg/ kWh liegen. Dabei ist zu bedenken, daß erst bei 3 kg/kWh ein ökologischer Nutzen entsteht, d.h. daß die Abwasserreinigung ohne toxische Nebenwirkungen, die heute durch den Sauerstoffmangel immer wieder entstehen durchgeführt werden kann. Mit der erfindungsgemäßen Vorrichtung wird eine erhebliche Verbesserung des spezifischen Eintragungswertes erzielt.

Die erfindungsgemäße Vorrichtung erfüllt also im Bereich der Abwasserreinigung oder der Abfallaufbereitung Funktionen, die bisher weder getrennt noch insgesamt mit den jetzt vorliegenden Ergebnissen durchgeführt werden konnten. Dieses ist von besonderer Bedeutung vor allem dann, wenn das Abwasser oder die zu reinigende Flüssigkeit oder die zu kontaktierende Flüssigkeit mit sehr hohen Organsubstanzen gelöst oder ungelöst belastet sind. Dies gilt insbesondere beispielsweise für Sikkerwasser, Filtratwässer oder Deponiewässer.

Um die Einwirkung auf das Ausgangsgemisch zu intensivieren, damit der kolloidale Zustand oder eine Koagulation in kurzer Zeit erreicht wird, beinhaltet die Vorrichtung einen Außenbehälter, der einen Innenbehälter umschließt, wobei der Außenbehälter und der Innenbehälter beide rotationssymmetrisch ausgebildet sind und eine hyperbelförmige Mantellinie aufweisen und sich nach unten verjüngen, und wobei der Innenbehälter und der Außenbehälter mit übereinanderliegenden Einfüllöffnungen versehen sind, so daß aus einer unteren Austragöffnung des Innenbehälters abgezogene Medium durch den vom Innenbehälter 22 und vom Außenbehälter 26 begrenzten Raum durch mechanische Mittel in Form von die Geschwindigkeit des Mediums im Innen- und Außenbehälter steuernde Saug-, Pump- oder Propellereinrichtungen transportierbar ist, wodurch das Medium unter Schwerkrafteinfluß in Spiralwirbeln den Innenbehälter von oben nach unten durchströmt.

Den aufgrund der Schwerkrafteinwirkung auf das Medium und der gewählten Form des Innenbehälter erzeugten Spiralwirbeln werden durch die genannten mechanischen Einrichtungen im Innenbehälter Saugkräfte überlagert, die die Wirbelgeschwindigkeiten erhöhen.

Mit dem im unteren Bereich des Innenbehälters und im unteren Bereich des Außenbehälters vorgesehenen mechanischen Mitteln ergibt sich eine Vielzahl von Steuerungsmöglichkeiten des den Innenbehälter und den Raum zwischen dem Innen- und dem Außenbehälter durchströmenden Mediums. Durch die Erhöhung der Geschwindigkeit des durch den Innenbehälter strömenden Mediums, durch die zusätzliche Verwirbelung dieses Mediums wird ein kolloidiertes Feststoff-Flüssigkeits-Gemisch in außerordentlich kurzer Zeit erzielt.

Das Medium kann auch durch Rückführung zur oberen Füllöffnung des Innenbehälters den Innenbehälter wiederholt durchströmen, bis der angestrebte Endzustand des Mediums erreicht ist.

Mit dieser Vorrichtung kann eine Koagualtion angestrebt werden. Es kann auch eine Entionisierung des Kolloidats erreicht werden, d.h. das Kolloidat befindet sich im zwischenaggregatlichen Zustand, was wiederum bedeutet, daß der innere kolloidative Zustand weder in den Bereich des festen, flüssigen oder gasförmigen oder gar in irgendeinen Bereich der Elektrizität gehört. Dies ist sozusagen die Voraussetzung für die Umgestaltung der Ausgangsmaterialien nach dem Durchgang durch die Kolloidphase. Diese Umgestaltungen erfolgen von dem Punkt der Kolloidation aus möglicherweise vielfältig. Je nachdem, ob man den organischen oder anorganischen Bereich betrachtet. Im organischen Bereich kommt es zu einer vollkommen veränderten Stoffbildung innerhalb der organischen Stoffbildeprozesse. Im anorganischen Bereich kommt man zu den veränderten mechanischen, physikalischen oder chemischen Eigenschaften. Die Veränderungen gehen so weit, daß Gefügebildungen und Kristallisierungen und überhaupt die Grundlagen der Konfigurationen gegenüber dem Ausgangsmaterial geändert werden.

Der Zwischenbehälter kann zur Vereinfachung seiner Fertigung aus kegelstumpfförmigen Segmenten aufgebaut sein.

Ausführungsbeispiele der erfindungsgemäßen Vorrichtung sind in den Zeichnungen dargestellt und werden im folgenden beschrieben. Es zeigen:
Fig. 1 die Vorrichtung im Aufriß,
Fig. 2 die Aufnahmetrommel und den damit verbundenen Zwischenbehälter, der hyperbelförmige Mantellinien aufweist,
Fig. 3 eine Ansicht in Richtung des Pfeiles III in Fig. 2 und
Fig. 4 ein weiteres Ausführungsbeispiel.

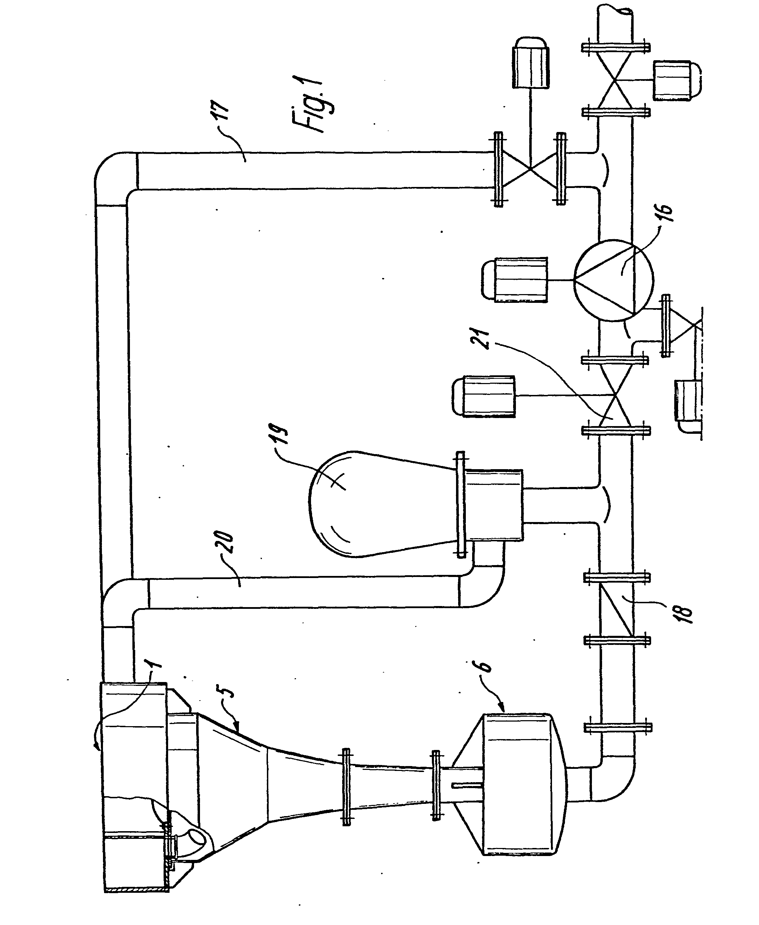

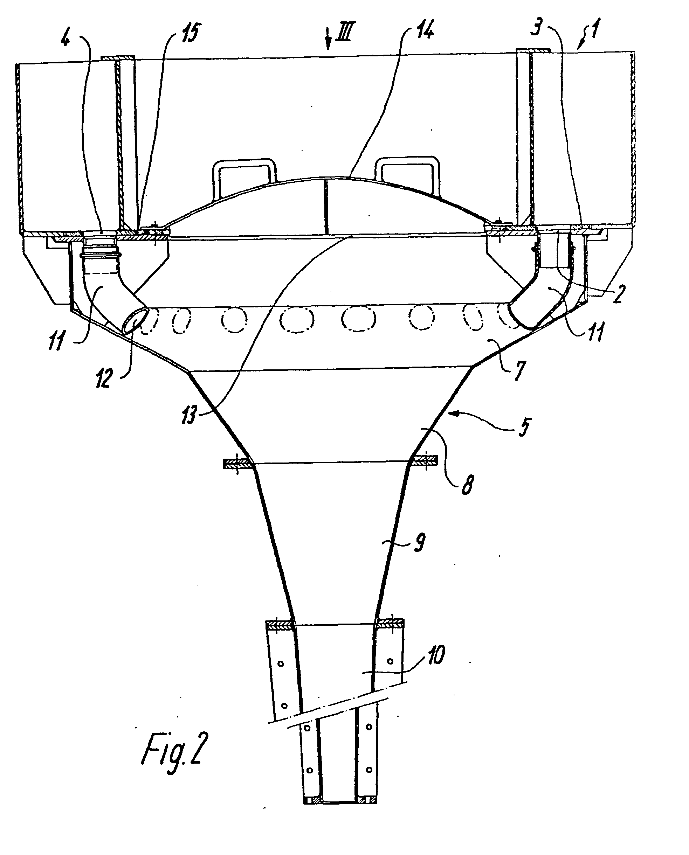

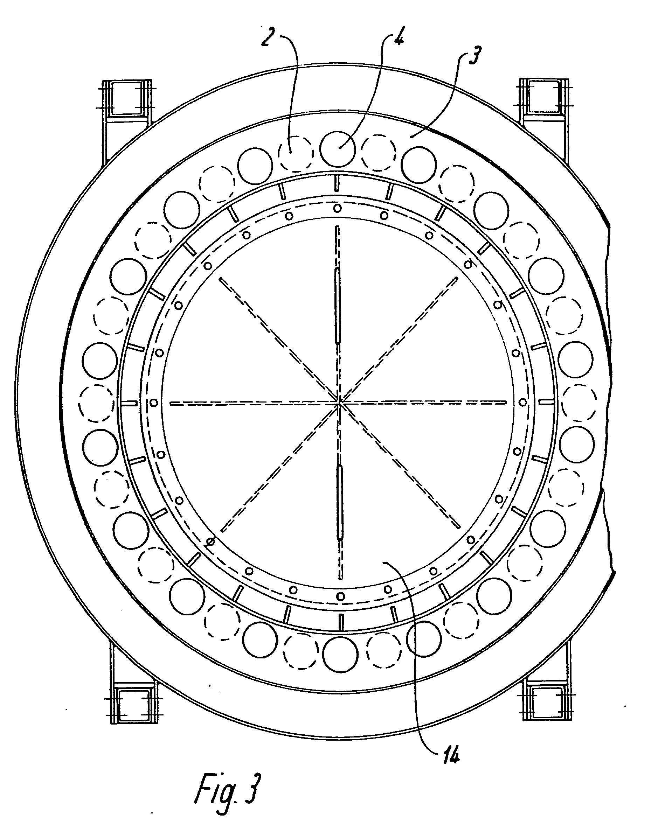

Die Vorrichtung gemäß Fig. 1 bis 3 weist eine Aufnahmetrommel 1 für das zu behandelnde Medium auf. Diese Aufnahmetrommel, die in dem dargestellten Ausführungsbeispiel ringförmig ausgebildet ist, ist im Bodenbereich mit Ablauföffnungen 2 versehen, die mittels eines Ringschiebers 3 verschließbar sind. In der Fig. 3 ist die Verschlußstellung des Ringschiebers aufgezeigt, der mit gleichmäßig auf dem Umfang verteilten Durchflußöffnungen 4 ausgerüstet ist, die, wie in der Fig. 2 dargestellt, in eine Lage gebracht werden können, in der sie mit den Ablauf-öffnungen 2 fluchten.

Mit der Aufnahmetrommel 1 ist ein Zwischenbehälter 5 verbunden, der sich nach unten hin verjüngt. Dieser Zwischenbehälter mündet an seinem unteren Ende in einen Auffangbehälter 6 ein, dessen Fassungsvermögen wenigstens dem der Aufnahmetrommel 1 entspricht. Die Aufnahmetrommel 1 der Zwischenbehälter 5 und der Auffangbehälter 6 weisen eine gemeinsame vertikale Mittelachse auf.

Der Zwischenbehälter 5 ist als rotationssymmetrischer Behälter ausgebildet und besitzt vorzugsweise in vertikaler Richtung eine hyperbelförmige Mantellinie.

Aus den Zeichnungen ergibt sich, daß der Zwischenbehälter aus kegelstumpfförmigen Segmenten 7, 8, 9, 10 aufgebaut ist, die miteinander flüssigkeitsdicht und gasdicht verbunden sind. Auch die Verbindung zwischen der Aufnahmetrommel 1 und dem Zwischenbehälter 5 sowie zwischen dem Zwischenbehälter 5 und dem Auffangbehälter 6 ist flüssigkeitsdicht und gasdicht, so daß auch die Möglichkeit besteht, in dem Zwischenbehälter mittels einer Vakuumpumpe einen Unterdruck zu erzeugen.

Die Ablauföffnungen 2 liegen in der Nähe des Außenrandes des Zwischenbehälters 5. Den Ablauföffnungen 2 sind abgewinkelte Stutzen 11 zugeordnet, deren untere Öffnungen 12 benachbart der Innenwandung des nach unten sich verjüngenden Mantels des Zwischenbehälters 5 liegen. Die Ablauföffnungen 2 im Bodenbereich der Aufnahmetrommel können mit dem Drehschieber 3 flüssigkeitsdicht und gasdicht verschlossen werden.

Der Zwischenbehälter 5 weist am oberen Ende eine mittige Öffnung 13 auf, die durch einen Deckel 15 verschlossen werden kann. Die Öffnung 13 wird von einem an dem Außenmantel des Zwischenbehälters festgelegten Außenring 15 begrenzt, der mit den Ablauföffnungen 2 versehen ist.

Sofern ein kolloides Feststoff-Flüssigkeits-System hergestellt werden soll, werden die Ausgangsstoffe in einem nicht dargestellten, mit einem Rührwerk ausgerüsteten Behälter vorgemischt. Von diesem Behälter wird das weiter zu behandelnde Medium mittels einer pumpe 16 durch eine Rohrleitung 17 in die Aufnahmetrommel 1 gefördert. Das vorgemischte Medium kann auch von Hand aus in die Aufnahmetrommel 1 gefüllt werden. Während des Befüllens der Aufnahmetrommel nimmt der Drehschieber 3 seine Verschlußstellung ein. Der Drehschieber wird dann in die Öffnungsstellung gebracht und das Feststoff-Flüssigkeits-Gemisch durchströmt hierauf die Stutzen 11 und gelangt in den vorzugsweise hyperbelförmigen Zwischen behälter, den es unter Spiralwirbeln durchströmt, wobei eine Zerkleinerung der Feststoffe stattfindet. Von dem Zwischenbehälter gelangt das Feststoff-Flüssigkeits-Gemisch in den Auffangbehäter 6.

Die Raumform des sich von der Aufnahmetrommel nach unten verjüngenden Zwischenbehälters ist für die Erzeugung der Wirbelströmung im Zwischehbehälter sehr wichtig. Optimale Strömungsverhältnisse werden durch einen Zwischenbehälter erreicht, dessen vertikale Mantellinien hyperbelförmig ausgebildet sind.

Im Grundriß sind die Maße durch die Wirbelformel gegeben. Die Linien des durchlaufenden Materials folgen im wesentlichen den Linien einer Hyperbelschnecke.

Die Bauhöhe und die übrigen Abmessungen des Zwischenbehälters hängen vom jeweiligen Einsatzzweck ab. Beispielsweise in Großkläranlagen wird der Zwischenbehälter eine Bauhöhe von mehr als 10 Metern haben. Für die Verwendung der Vorrichtung in Hauskläranlagen oder auf Baustellen zur Herstellung eines Zement-Wasser-Gemisches dürften Bauhöhen von 1 Meter für den Zwischenbehälter ausreichend sein.

Die Innenwandung des Zwischenbehälters kann glatt ausgebildet sein. Es können jedoch auch Führungsschienen oder sonstige Leitelemente an der Innenwandung des Zwischenbehälters 5 angeordnet werden, durch die das Durchströmen des Zwischenbehälters in schneckenförmigen Umlauflinien unterstützt wird.

Der Auffangbehälter kann unmittelbar mit dem unteren Ende des Zwischenbehälters verbunden werden. Es ist jedoch auch denkbar, daß zwischen dem Zwischenbehälter und dem Auffangbehälter noch eine Rohrleitung vorgesehen ist. In diesem Fall müßten die Abmessungen dieser Rohrleitung so sein, daß in der Rohrleitung kein Materialstau entsteht.

In einigen Fällen wird es ausreichend sein, daß das zu behandelnde Material den Zwischenbehälter 5 einmal durchströmt.

In anderen Fällen muß das Material z.B. das Feststoff-Flüssigkeits-Gemisch, den Zwischenbehälter mehrmals durchlaufen, damit das angestrebt Mischungssystem erreicht wird.

Die Vorrichtung nach der Fig. 1 ist so gestaltet, daß das zu behandelnde Medium den Zwischenbehälter mehrmals durchströmt. Nach dem Durchströmen des Zwischenbehälters stürzt das Medium in den Auffangbehälter 6. Die hierbei entstehende Aufprallenergie kann über ein entsprechendes Überdruckventil 18 einer Druckspeichereinrichtung 19 zugeführt werden, die nach dem Prinzip eines Wasserhammers (eines Widders) arbeitet und mit einem Windkessel ausgerüstet ist. Der in den Windkessel aufgrund der Aufprallenergie des Mediums zusätzlich eingespeicherte Druck kann dazu benutzt werden, das Medium über eine Leitung 20 in die Aufnahmetrommel zurückzufördern. Bei dieser Förderung des Mediums nimmt der Schieber 21 die Verschlußstellung ein.

In einer Versuchsanlage hatte der Zwischenbehälter 5 einen maximalen Radius von 200 mm und bei einer Querschnittsverengung von 1 : 9 eine Bauhöhe von 1,80 m. Die Aufnahmetrommel 1 hatte eine Bauhöhe von 200 mm und ein Füllvolumen von 60 l. Das Füllvolumen des Auffangbehälters 6 entsprach dem der Aufnahmetrommel.

Versuchsreihe 1

Auf 30 l Wasser wurden 60 kg Zement gegeben. Das Material wurde im normalen Mischer vorgemischt und über eine Pumpe in die Aufnahmetrommel gefördert, dessen Drehschieber die Verschlußstellung einnahm. In dem Zwischenbehälter 5 wurde ein Unterdruck von 0,5 bar erzeugt und dann der Drehschieber in die Öffnungsstellung gebracht. Der aus Kunstharz gefertigte Zwischenbehälter 5 ermöglichte die Beobachtung der Materialströmung im Zwischenbehälter. Das Material stürzte in Spiralwirbeln nach unten. Im unteren Viertel des Zwischenbehälters war erkennbar, daß die Wirbelfläche fast horizontal verlief und die Wirbellinien ausserordentlich dicht beieinanderlagen, so daß der Weg durch die Dichte der Wirbelbahn sehr lang wurde bei entsprechend steigender Geschwindigkeit. Das Material wurde im Auffangbehälter 6 aufgefangen und in die obere Aufnahmetrommel zurückgepumpt. Nach einem Durchgang war bereits eine Emulsionstendenz in der Mischung erkennbar. Nach dem dritten Durchgang stieg die Viskosität derartig an, daß der Übergang von der Emulsion zum kolloiden System bereits festgestellt werden konnte.

Versuchsreihe 2

Nach Erzeugung des Unterdrucks von 0,5 bar wurde das in die Aufnahmetrommel eingefüllte Wasser-Zement-Gemisch von 60 l durch Öffnen des Drehschiebers in den Zwischenbehälter eingeführt. Nachdem der Absinkspiegel des Materials 3/5 der Sturzhöhe im Zwischenbehälter erreicht hatte, wurde der Drehschieber wieder geschlossen. Die Bewegungsverharrung ließ das Material weiter abstürzen, wobei jedoch im oberen Raum des Zwischenbehälters ein erhöhter Unterdruck entstand. In einer Entfernung von 10 bis 15 cm oberhalb der Einmündung des Auffangbehälters 6 kam der Absinkspiegel des Materials zur Ruhe und das Material wurde mit hoher Geschwindigkeit wieder nach oben gefördert. Durch eine entsprechende Steuerung des Drehschiebers und des Unterdrucks konnte ein außerordentlich intensives Auf- und Abpendeln des Materials bewirkt werden. Der Mischeffekt war entsprechend intensiv. Bei der Wasser-Zement-Mischungen wurde das kolloide System nach drei bis fünf Pendelprozessen erreicht.

Versuchsreihe 3

Es wurden in die Aufnahmetrommel und in den Zwischenbhealter verdünnte Abwasserschläme mit einem BSB-Wert von 850 eingeführt. In dem Zwischenbehälter wurde kein Unterdruck erzeugt. Bei geöffneten Ablauföffnungen und bei abgenommenem Deckel 14 wurde eine Menge von 60 bis 80 l eingeführt. Hier zeigte sich, daß die eingeführte Menge und die Geschwindigkeit in der Aufnahmetrommel so groß bzw. so hoch sein müssen, daß sich zunächst ein Stauspiegel einstellt. Dann kann die Menge so weit zurückgenommen werden, bis aus dem Stauspiegel sich der Saugablaufwirbel einstellt. Die Menge, die zur Erhaltung des Saugablaufwirbels ausreichend ist, bestimmt dann die durch den Drehschieber freigegebenen Ablauföffnungen für den Dauerbetrieb. Mit normaler Gravitationwurde hier ein Einspeicherungseffekt erzielt, der schon sehr interessant ist und der gemessen im Sauerstoffeintragsergebnis schon die 10-kg-Marke bezogen auf die eingesetzte Energie, also ein kWh, erreichen läßt.

Versuchsreihe 4

Im oberen Segment des Zwischenbehälters waren drei Luftventile vorgesehen. Im Zwischenbehälter wurde ein Unterdruck von 0,5 bar erzeugt. Der in der Aufnahmetrommel vorhandene Abwasserschlamm wurde dann durch Öffnen des Drehschiebers in den Zwischenbhealter eingeführt. Nach Einstellung der Wirbelströmung wurden die drei Luftventile geöffnet. Der spezifische Sauerstoffeintrag erhöhte sich nur unwesentlich, er ging auf die Marke von 12 kg/kWh zu. Es war aber erkennbar, daß die Leistung der Vorrichtung nicht ausgeschöpft war, daß also unter Zuschaltung des Unterdruckes die Kapazität der Vorrichtung erheblich gesteigert werden kann. Es hätten zur gleichen Zeit statt 80 auch 160 l durchgesetzt werden können.

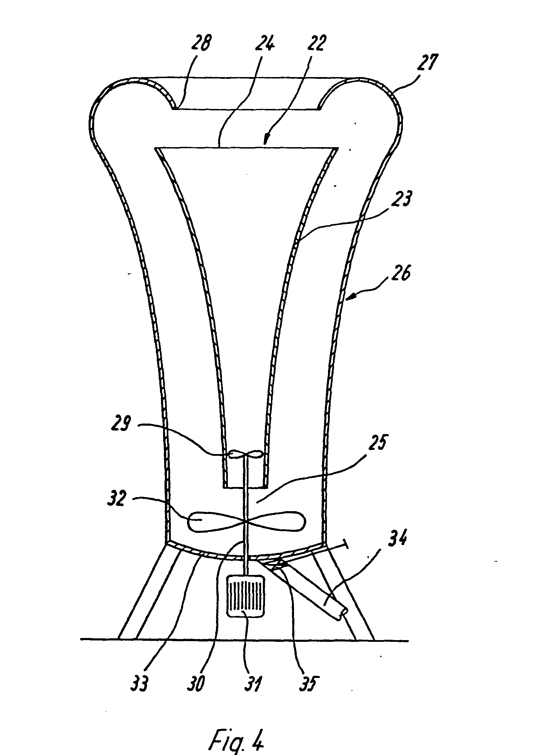

Die Vorrichtung nach der Fig. 4 weist einen Innenbehälter 22 auf, der als rotationssymmetrischer ßehälter ausgebildet ist und eine hyperbelförmige Mantellinie 23 besitzt. Dieser Innenbehälter weist eine obere Füllöffnung 24 auf und eine untere Austragöffnung 25 auf. Der Innenbehälter wird von einem Außenbehälter 26 umschlossen, wobei der Abstand zwischen dem Mantel des Innenbehälters und des Außenbehälters über die gesamte Höhe des Innenbehälters umlaufend gleich ist. Der Aussenbehälter 26 ist somit auch als rotationssymmetrischer Körper ausgebildet, der eine hyperbelförmige Mantellinie aufweist. Der Außenbehälter 6 ist ferner mit einem oberen Umlenkteil 27 versehen, das sich quer über die Höhe Einfüllöffnung 24 hinaus erstreckt und im Querschnitt bogenförmig gestaltet ist. Der freie Innenraum 28 des Umlenkteils liegt oberhalb der Einfüllöffnung. Durch die bogenförmige Kontur des Umlenkteils 27 wird das im Ringraum zwischen dem Inennbehälter und dem Außenbehälter hochgeförderte Material so umgelenkt, daß ein Abspritzen von der Innenwand des Außenbehälters vermieden und das Material gleichmäßig in die Füllöffnung 24 des Innenbehälters eingebracht wird.

Im unteren Bereich des Innenbehälters 23 ist ein Propeller 29 angeordnet, der auf einer Antriebswelle 30 befestigt ist. Dieser Propeller wird mittels eines Motors 31 angetrieben. In dem Ausführungsbeispiel ist auf der Antriebswelle 30 ein weiterer propeller 32 befestigt, dessen Durchmesser wesentlich größer ist als der des Propellers 29 und dessen Flügel einen anderen Anstellwinkel besitzen als die Flügel des Propellers 29. Durch den Propeller 29 wird das in den Innenbehälter 22 eingegbene Feststoff-Flüssigkeits-Gemisch, das den Behälter in Spiralwirbeln durchströmt, nach unten abgesaugt und durch die Austragöffnung 25 gedrückt. Das Material wird somit Zentripetal- und Zentrifugalkräften ausgesetzt.

Die Propeller können auch gegenläufig arbeiten und separate Antriebe aufweisen.

Das bearbeitete Material kann in der Schlußphase nur unter Einwirkung der Zentripetalkräfte durch einfaches Durchlaufendes Innenbehälters nach der Kolloidation stabilisiert werden. Es kann dann so kolloidiert und dynamisiert austreten.

Zu diesem Zweck ist ein vom Boden 33 des Außenbehälters 26 ausgehendes Abzugsrohr 34 vorgesehen, in dem benachbart dem Boden 33 ein Absperrschieber 35 angeordnet ist.

Alle flüssigen Substanzen können in dieser Vorrichtung behandelt werden. Von großer Bedeutung ist ein derartiger Vorgang beispielsweise für die Durchführung von stoffwechselähnlichen Prozessen zum Zwecke erheblicher Qualitätssteigerungen oder Stoffveränderungen in den Bereichen Wasser, Abwasser, Schlämme, Schadstoffe, Mineralien, Blutwäsche, Dialyse u.dgl.

Im Raum zwischen dem Innenbehälter 22 und dem Außenbehälter 26 konnen Leitschienen oder Bremsschwellen für das strömende Medium angeordnet sein.

## Patentansprüche

1. Vorrichtung zum Herstellen hochwertiger Feststoff-Flüssigkeits-Gemische bis zum kolloiden System oder bis zur Koagulation, zur Wasseraufbereichtung oder zum Einbringen von Gasen in Flüssigkeiten mit mindestens einem mehrere obere Füllöffnungen aufweisenden, sich nach unten verjüngenden, vom Medium unter Schwerkrafteinfluß in Spiralwirbeln durchströmten Zwischenbehälter (5) und mit einem Auffangbehälter (6), in den der Zwischenbehälter (5) einmündet, wobei dem Zwischenbehälter (5) eine Aufnahmetrommel (1) für das zu behandelnde Medium vorgeschaltet ist, die einen mit als Füllöffnungen dienenden verschließbaren Ablauföffnungen (2) versehenen Boden aufweist, die Aufnahmetrommel (1), der Zwischenbehälter (5) und der Auffangbehälter (6) eine gemeinsame vertikale Mittelachse haben, die Aufnahmetrommel (1) ringförmig ausgebildet ist und ihre Ablauföffnungen (2) in der Nähe des Außenrandes des Zwischenbehälters (5) liegen, die Ablauföffnungen (2) mittels eines Ringschiebers (3) verschließbar sind und den Ablauföffnungen (2) abgewinkelte Stutzen (11) zugeordnet sind, deren untere Öffnungen (12) benachbart der Innenwandung des nach unten sich verjüngenden Mantels des Zwischenbehälters (5) liegen, und daß der Zwischenbehälter (5) als rotationssymmetrischer Behälter ausgebildet ist und eine hyperbelförmige Mantellinie in vertikaler Richtung aufweist.

2. Vorrichtung nach Anspruch 1, dadurch gekennzeichnet, daß an der Innenwandung des Zwischenbehälters (5) Leitelemente vorgesehen sind.

3. Vorrichtung zum Herstellen hochwertiger Feststoff-Flüssigkeits-Gemische bis zum kolloiden System oder bis zur Koagulation, zur Wasseraufbereitung oder zum Einbringen von Gasen in Flüssigkeiten, mit einem Außenbehälter (26), der einen Innenbehälter (22) umschließt, daß der Außenbehälter (26) und der Innenbehälter (22) beide rotationssymmetrisch ausgebildet sind und eine hyperbelförmige Mantellinie aufweisen und sich nach unten verjüngen, daß der Innenbehälter (22) und der Außenbehälter (26) mit übereinanderliegenden Füllöffnungen versehen sind, und daß aus einer unteren Austragöffnung des Innenbehälters (22) abgezogene Medium durch den vom Innenbehälter (22) und vom Außenbehälter (26) begrenzten Raum durch mechanische Mittel in Form von die Geschwindigkeit des Mediums im Innen- und Außenbehälter (22, 26) steuernde Saug-, Pump- oder Propellereinrichtungen transportierbar ist, wobei das Medium unter Schwerkrafteinfluß in Spiralwirbeln den Innenbehälter (22) von oben nach unten durchströmt.

4. Vorrichtung nach Anspruch 3, dadurch gekennzeichnet, daß der Abstand zwischen dem Mantel (23) des Innenbehälters (22) und des Außenbehälters (26) über die gesamte Höhe des Innenbehälters umlaufend gleich ist und der Außenbehälter (26) ein oberes, über die Höhe der Einfüllöffnung (24) des Innenbehälters (22) hinaus sich erstreckendes, im Querschnitt bogenförmig gestaltetes Umlenkungsteil (27) aufweist.

5. Vorrichtung nach Anspruch 3, dadurch gekennzeichnet, daß die die Geschwindigkeit des Mediums im Innen- und Außenbehälter (22, 26) steuernden Saug-, Pump- oder Propellereinrichtungen im unteren Bereich des Innen- und des Außenbehälters (22, 26) vorgesehen sind.

6. Vorrichtung nach Anspruch 5, dadurch gekennzeichnet, daß sowohl im unteren Bereich des Innenbehälters (22) als auch im unteren Bereich des Außenbehälters (26) je ein antreibbarer Propeller (29, 32) vorgesehen sind, durch die das Medium aus dem Innenbehälter gefördert und durch den Außenbehälter zurück in die Füllöffnung (24) des Innenbehälters (22) transportiert wird.

7. Vorrichtung nach Anspruch 6, dadurch gekennzeichnet, daß die Propellerflügel unterschiedliche Anstellwinkel und auf einer gemeinsamen vertikalen Antriebswelle (30) angeordnet sind und der untere im Außenbehälter vorgesehene Propeller (32) einen größeren Durchmesser aufweist als der Propeller (29) des Innenbehälters (22).

8. Vorrichtung nach Anspruch 1, dadurch gekennzeichnet, daß der Zwischenbehälter (5) aus kegelstumpfförmigen Segmenten (7, 8, 9, 10) aufgebaut ist, die zusammengebaut die Kontur eines Hyperboloids ergeben.

9. Vorrichtung nach Anspruch 1, dadurch gekennzeichnet, daß der Zwischenbehälter (5) am oberen Ende eine mittige, durch einen Deckel (14) verschließbare Öffnung (13) aufweist, die von einem an den Außenmantel des Zwischenbehälters (5) festgelegten Außenring (15) umschlossen ist, wobei der Außenring die mittels des Ringschiebers (3) verschließbaren Ablauföffnungen (2) aufweist.

10. Vorrichtung nach Anspruch 1, dadurch gekennzeichnet, daß die Aufnahmetrommel (1) und der Auffangbehälter (6) mit dem Zwischenbehälter (5) flüssigkeitsund gasdicht verbunden sind.

11. Vorrichtung nach Anspruch 1, dadurch gekennzeichnet, daß die Ablauföffnungen (2) im Bodenbereich der Aufnahmetrommel (11) flüssigkeitsdicht oder gasdicht mittels des Ringschiebers (3) verschließbar sind.

12. Vorrichtung nach Anspruch 1, dadurch gekennzeichnet, daß in der Wandung des Zwischenbehälters (5) Öffnungen zum Einspeisen von Gasen oder körnigen Stoffen oder von Flüssigkeiten vorgesehen sind.

13. Verfahren zum Herstellen hochwertiger Feststoff-Flüssigkeits-Gemische bis zum kolloiden System oder bis zur Koagulation unter Verwendung einer Vorrichtung nach den Ansprüchen 10 und 11, wonach nach dem Einfüllen des Feststoff-Flüssigkeits-Gemisches in die Aufnahmetrommel (1) und vor dem Öffnen des Ringschiebers (3) in dem Zwischenbehälter (5) ein Unterdruck erzeugt, dann der Ringschieber geöffnet wird und das Material in Spiralwirbeln den Zwischenbehälter durchströmt und von dem Auffangbehälter (6) aufgenommen wird und dieses Verfahren mehrfach wiederholt wird, bis zur Zerkleinerung und Beeinflussung der Feststoffpartikel das kolloidierte System oder die koagulierte Substanz erreicht ist.

14. Verfahren nach Anspruch 13, dadurch gekennzeichnet, daß nach dem Füllen der Aufnahmetrommel (1) im Zwischenbehälter (5) ein Unterdruck erzeugt wird, die Ablauföffnungen (2) geöffnet werden und nachdem der Absinkspiegel des Mediums im Zwischenbehälter (5) eine bestimmte Fallhöhe erreicht hat, die Ablauföffnungen geschlossen werden und dann unter Vakuumeinfluß das Medium zurückströmt.

15. Verfahren nach Anspruch 14, dadurch gekennzeichnet, daß im Zwischenbehälter (5) durch eine abgestimmte Steuerung des Unterdrucks und des Ringschiebers (13) eine pendelnde Hinundherbewegung des Mediums erzeugt wird.

## Revendications

1. Dispositif de préparation de mélanges solide-liquide à haute teneur jusqu'au système colloïdal ou jusqu'à la coagulation, pour le traitement de l'eau ou pour l'introduction de gaz dans des liquides, avec au moins un réservoir intermédiaire (5) présentant plusieurs ouvertures de remplissage supérieures, se rétrécissant vers le bas et traversé en tourbillonnement spiral par le fluide sous l'action de la force centrifuge, et avec un réservoir collecteur (6) dans lequel débouche le réservoir intermédiaire (5), un tambour récepteur (1) pour le fluide à traiter étant monté avant le réservoir intermédiaire (5), tambour qui présente un fond pourvu d'ouvertures d'évacuation obturables (2) servant d'ouvertures de remplissage, le tambour récepteur (1), le réservoir intermédiaire (5) et le réservoir collecteur (6) ayant un axe médian vertical commun, le tambour récepteur (1) étant réalisé sous une forme annulaire et ses ouvertures d'évacuation (2) étant situées au voisinage du bord extérieur du réservoir intermédiaire (5), les ouvertures d'évacuation (2) étant obturables au moyen d'un tiroir annulaire (3), et des tubulures coudées (11) étant associées aux ouvertures d'évacuation (2), tubulures dont les ouvertures inférieures (12) se trouvent au voisinage de la paroi intérieure de l'enveloppe du réservoir intermédiaire (5) qui se rétrécit vers le bas, et le réservoir intermédiaire (5) étant réalisé sous la forme d'un récipient à symétrie de révolution, et présentant une génératrice hyperbolique en direction verticale.

2. Dispositif selon la revendication 1, caractérisé en ce que des éléments directeurs sont prévus sur la paroi intérieure du réservoir intermédiaire (5).

3. Dispositif de préparation de mélanges solide-liquide à haute teneur jusqu'au système colloïdal ou jusqu'à la coagulation, pour le traitement de l'eau ou pour l'introduction de gaz dans des liquides, avec un récipient extérieur (26) qui entoure un récipient intérieur (22), le récipient extérieur (26) et le récipient intérieur (22) sont tous deux réalisés à symétrie de révolution, présentent une génératrice hyperbolique, et se rétrécissent vers le bas, en ce que le récipient intérieur (22) et le récipient extérieur (26) sont munis d'ouvertures de remplissage superposées, et en ce que le fluide, soutiré par une ouverture de déversement inférieure du récipient intérieur (22). peut être transporté à travers l'espace dé-limité entre le récipient intérieur (22) et le récipient extérieur (26) par des moyens mécaniques sous la forme de dispositifs d'aspiration, de pompage ou de propulsion qui commandent la vitesse du fluide dans le récipient intérieur et dans le récipient extérieur (22, 26), le fluide traversant le récipient intérieur (22) de haut en bas, en tourbillonnement spiral, sous l'action de la force centrifuge.

4. Dispositif selon la revendication 3, caractérisé en ce que la distance entre l'enveloppe (23) du récipient intérieur (22) et celle du récipient extérieur (26) est circulairement identique sur toute la hauteur du récipient intérieur, et le récipient extérieur (26) présente une partie de renvoi supérieure (27), de section coudée, qui s'étend au-delà de la hauteur de l'ouverture de remplissage (24) du récipient intérieur (22).

5. Dispositif selon la revendication 3, caractérisé en ce que les dispositifs d'aspiration de pompage ou de propulsion, qui commandent la vitesse du fluide dans le récipient intérieur et dans le récipient extérieur (22, 26), sont prévus dans la région inférieure du récipient intérieur et du récipient extérieur (22, 26).

6. Dispositif selon la revendication 5, caractérisé en ce des hélices propulsives respectives (29, 32) sont prévues respectivement dans la région inférieure du récipient intérieur (22) et dans la région inférieure du récipient extérieur (26), par lesquelles le fluide est extrait du récipient intérieur et ramené dans l'ouverture de remplissage (24) du récipient intérieur (22) en traversant le récipient extérieur.

7. Dispositif selon la revendication 6, caractérisé en ce que les pales des hélices présentent des angles d'attaque différents et sont disposées sur un arbre d'entraînement vertical commun (30), et l'hélice inférieure (32) prévue dans le récipient extérieur présente un plus grand diamètre que l'hélice (29) du récipient intérieur (22).

8. Dispositif selon la revendication 1, caractérisé en ce que le réservoir intermédiaire (5) est constitué de segments tronconiques (7, 8, 9, 10) qui, assemblés, fournissent le contour d'un hyperboloïde.

9. Dispositif selon la revendication 1, caractérisé en ce que le réservoir intermédiaire (5) présente, à son extrémité supérieure, une ouverture centrale (13) qui peut être fermée par un couvercle (14), et qui est entourée par une bague extérieure (15) fixée sur l'enveloppe extérieure du réservoir intermédiaire (5), la bague extérieure présentent les ouvertures d'évacuation (2), qui peuvent être fermées au moyen du tiroir annulaire (3).

10. Dispositif selon la revendication 1, caractérisé en ce que le tambour récepteur (1) et le réservoir collecteur (6) sont assemblés au réservoir intermédiaire (5) de manière étanche aux liquides et aux gaz.

11. Dispositif selon la revendication 10, caractérisé en ce que les ouvertures d'évacuation (2), prévues dans la région de fond du tambour récepteur (1), peuvent être fermées par le tiroir annulaire (3) de manière étanche aux liquides ou aux gaz.

12. Dispositif selon la revendication 1, caractérisé en ce que des ouvertures sont prévues dans la paroi du réservoir intermédiaire (5), pour l'alimentation de gaz ou de substances granuleuses ou de liquides.

13. Procédé de préparation de mélanges solide-liquide à haute teneur jusqu'au système colloïdal ou jusqu'à la coagulation en utilisant un dispositif selon les revendications 10 et 11, selon lequel une dépression est produite dans le réservoir intermédiaire (5) après le remplissage du mélange solide-liquide dans le tambour récepteur (1) et avant l'ouverture du tiroir annulaire (3), le tiroir annulaire est ensuite ouvert, et le matériau traverse le réservoir intermédiaire en tourbillonnement spiral et est reçu par le réservoir collecteur (6), ce processus étant répété plusieurs fois jusqu'à ce que le système colloïde ou la substance coagulée soit atteint par fragmentation des particules solides et influence sur ces dernières.

14. Procédé selon la revendication 13, caractérisé en ce qu'une dépression est produite dans le réservoir intermédiaire (5) à la suite du remplissage du tambour récepteur (1), les ouvertures d'évacuation (2) sont ouvertes, et une fois que le niveau de descente du fluide dans le réservoir intermédiaire (5) a atteint une hauteur de chute donnée, les ouvertures d'évacuation sont fermées, et le fluide reflue sous l'influence du vide.

15. Procédé selon la revendication 14, caractérisé en ce qu'un mouvement pendulaire en va-et-vient du fluide dans le réservoir intermédiaire (5) est produit par une commande adaptée de la dépression et du tiroir annulaire (3).

**Claims**

1. Apparatus for the preparation of high-quality solid-liquid mixtures up to a colloidal system or coagulation for the treatment of water or for the introduction of gases into liquids with at least one intermediate container (5) which has a plurality of upper filling openings and which tapers downwardly and through which the medium flows under the influence of the force of gravity in spiral whirls, and a collecting container (6) into which the intermediate container (5) opens, wherein disposed upstream of the intermediate container (5) is a receiving drum (1) for the medium to be treated and which has a bottom provided with closable drain openings (2) serving as filling openings, the receiving drum (1), the intermediate container (5) and the collecting container (6) have a common vertical centre line, the receiving drum (1) is of an annular configuration and its drain openings (2) are disposed in the vicinity of the outside edge of the intermediate container (5), the drain openings (2) are closable by means of an annular slider (3) and associated with the drain openings (2) are angular pipe portions (11) whose lower openings (12) are disposed adjacent the inside wall of the downwardly tapering casing of the intermediate container (5) and that the intermediate container (5) is in the form of a rotationally symmetrical container and has a hyperbolic generatrix in a vertical direction.

2. Apparatus according to claim 1 characterised in that guide elements are provided on the inside wall of the intermediate container (5).

3. Apparatus for the preparation of high-quality solid-liquid mixtures up to a colloidal system or coagulation, for the treatment of water or for the introduction of gases into liquids, comprising an outside container (26) which encloses an inside container (22), that the outside container (26) and the inside container (22) are both of a rotationally symmetrical configuration and have a hyperbolic generatrix and taper downwardly, that the inside container (22) and the outside container (26) are provided with filling openings in superposed relationship, and that medium which is drawn out of a lower discharge opening of the inside container (22) can be transported through the space delineated by the inside container (22) and the outside container (26) by mechanical means in the form of suction, pump or propeller devices which control the speed of the medium in the inside and outside containers (22, 26), wherein the medium flows downwardly through the inside container (22) under the influence of the force of gravity in spiral whirls.

4. Apparatus according to claim 3 characterised in that the spacing between the casing (23) of the inside container (22) and the outside container (26) is the same over the entire height of the inside container therearound and the outside container (26) has an upper deflection portion (27) of arcuate cross-sectional configuration and which extends beyond the height of the filling opening (24) of the inside container (22).

5. Apparatus according to claim 3 characterised in that the suction, pump or propeller devices for controlling the speed of the medium in the inside and outside containers (22, 26) are provided in the lower region of the inside and outside containers (22, 26).

8

6. Apparatus according to claim 5 characterised in that provided both in the lower region of the inside container (22) and also in the lower region of the outside container (26) are respective drivable propellers (29, 32) by which the medium is conveyed out of the inside container and transported through the outside container back into the filling opening (24) of the inside container (22).

7. Apparatus according to claim 6 characterised in that the propeller blades are arranged at different angles of attack and on a common vertical drive shaft (30) and the lower propeller (32) which is provided in the outside container is of larger diameter than the propeller (29) of the inside container (22).

8. Apparatus according to claim 1 characterised in that the intermediate container (5) is composed of frustoconical segments (7, 8, 9, 10) which in the assembled condition provide the contour of a hyperboloid.

9. Apparatus according to claim 1 characterised in that at the upper end the intermediate container (5) has a central opening (13) which is closable by a cover (14) and which is surrounded by an outside ring (15) secured to the outside casing of the intermediate container (5), wherein the outside ring has the drain openings (2) which are closable by means of the annular slider (3).

10. Apparatus according to claim 1 characterised in that the receiving drum (1) and the collecting container (6) are liquid-tightly and gas-tightly connected to the intermediate container (5).

11. Apparatus according to claim 10 characterised in that the drain openings (2) in the bottom region of the receiving drum (1) are liquid-tightly or gas-tightly closable by means of the annular slider (3).

12. Apparatus according to claim 1 characterised in that provided in the wall of the intermediate container (5) are openings for the injection of gases or granular materials or liquids.

13. A process for the preparation of high-quality solid-liquid mixtures up to a colloidal system or coagulation, using an apparatus according to claims 10 and 11 wherein after the solid-liquid mixture has been introduced into the receiving drum (1) and prior to opening of the annular slider (3) a reduced pressure is generated in the intermediate container (5), then the annular slider is opened and the material flows through the intermediate container in spiral whirls and is received by the collecting container (6) and that process is repeated a number of times until to reduce the size of and influence the solid particles the colloided system or the coagulated substance is attained.

14. A process according to claim 13 characterised in that after the operation of filling the receiving drum (1) a reduced pressure is generated in the intermediate container (5), the drain openings (2) are opened and after the falling level of the medium in the intermediate container (5) has reached a certain fall head the drain openings are closed and then the medium flows back under the influence of vacuum.

15. A process according to claim 14 characterised in that a cyclic reciprocating movement of the medium is produced in the intermediate container (5) by co-ordinated control of the reduced pressure and the annular slider (13).

Fig.1

EP 0 134 890 B1

EP 0 134 890 B1

Fig.2

2

Fig. 3

Fig. 4

4